# EUROPÄISCHE PATENTSCHRIFT

(11) **EP 3 561 295 B1**
(45) Veröffentlichungstag und Bekanntmachung des Hinweises auf die Patenterteilung: **04.11.2020**
(21) Anmeldenummer: 18169020.7
(22) Anmeldetag: 24.04.2018
(51) Int. Cl.: F03D 17/00, F03D 7/02

(54) **VERFAHREN ZUM ERMITTELN EINER AERODYNAMISCHEN UNWUCHT AN EINEM ROTOR EINER WINDKRAFTANLAGE**
METHOD FOR DETERMINING AN AERODYNAMIC IMBALANCE OF A ROTOR OF A WIND TURBINE
PROCÉDÉ DE DÉTERMINATION D'UN BALOURD AÉRODYNAMIQUE D'UN ROTOR D'UNE ÉOLIENNE

(30) Priorität: 23.04.2018 EP 18168651
(43) Veröffentlichungstag der Anmeldung: 30.10.2019
(73) Patentinhaber: Wölfel Engineering GmbH & Co. KG., 97204 Höchberg (DE)
(72) Erfinder: Colomer Segura, Carles, 97072 Würzburg (DE); Schmidt, Christoph, 97080 Würzburg (DE)
(74) Vertreter: Keil & Schaafhausen Patentanwälte PartGmbB

(56) Entgegenhaltungen:
- DE-A1-102014 204 017

## Beschreibung

Die vorliegende Erfindung betrifft ein Verfahren zum Ermitteln einer aerodynamischen Unwucht an einem Rotor einer Windkraftanlage.

DE 10 2014 204 017 A1 beschreibt ein Verfahren und eine Vorrichtung zur Rotorblatteinstellung für eine Windkraftanlage. Hierbei wird eine aerodynamische Unwucht an einem Rotor einer Windkraftanlage ermittelt, der mehrere Rotorblätter aufweist. Für jedes Rotorblatt wird ein Pitchwinkelindikator mit Hilfe einer an dem Rotorblatt montierten Sensoranordnung ermittelt, die jeweils eine Lageveränderung ihrer Position in Bezug auf die Erd-Schwerkraft erfasst. Für jedes Rotorblatt wird ein Blattlastindikator gebildet und man vergleicht die Blattlastindikatoren der Rotorblätter.

Ein Rotor einer Windkraftanlage hat in der Regel mehrere Rotorblätter, die mit gleichen Winkelabständen um die Rotorachse herum verteilt angeordnet sind. Der Rotor muss mechanisch ausgewuchtet sein, um unerwünschte Schwingungen zu vermeiden, die zu störenden Geräuschen und vor allem zu einem übermäßigen Verschleiß führen.

Neben einer mechanischen Unwucht gibt es aber auch ein Problem mit einer so genannten aerodynamischen Unwucht. Eine aerodynamische Unwucht entsteht dann, wenn nicht alle Rotorblätter in gleichem Maße zum Antriebsmoment beitragen, das den Rotor letztendlich in Drehung versetzt. Wenn beispielsweise ein Rotorblatt eine höhere Antriebsleistung erbringt, sind die zur Erzeugung der Drehmomente wirkenden Kräfte auf den Rotor nicht mehr gleichmäßig auf alle Rotorblätter verteilt. Es ergibt sich dann eine mit dem Rotor umlaufende Kraftkomponente, was prinzipiell die gleichen störenden Auswirkungen hat, wie eine mechanische Unwucht.

Eine Ursache für eine aerodynamische Unwucht ergibt sich dann, wenn die Rotorblätter nicht alle den gleichen Pitchwinkel aufweisen. Der Pitchwinkel ist der Winkel des Rotorblatts um seine Längsachse, also eine Achse, die im Wesentlichen senkrecht auf der Rotationsachse des Rotors steht. Bei modernen Windkraftanlagen kann der Pitchwinkel der Rotorblätter durch eine Steuerung verändert werden.

Bislang werden Pitchwinkel-Fehlstellungen mit relativ aufwändigen optischen Vermessungstechniken ermittelt. Aufgrund des erhöhten Aufwandes sieht man in vielen Fällen davon ab, zu überprüfen, ob der Pitchwinkel der Rotorblätter jeweils korrekt eingestellt ist. Dies kann zu einem vorzeitigen Verschleiß der Windkraftanlage führen.

Der Erfindung liegt die Aufgabe zugrunde, eine Verschleißursache klein zu halten.

Diese Aufgabe wird bei einem Verfahren der eingangs genannten Art dadurch gelöst, dass es folgende Schritte aufweist:
a) Für jedes Rotorblatt ermitteln eines Pitchwinkelindikators mit Hilfe einer an dem Rotorblatt montierten Sensoranordnung, die jeweils eine Lageveränderung ihrer Position in Bezug auf die Erd-Schwerkraft erfasst und einem Pitchwinkel-Sollwert;
b) Für jedes Rotorblatt bilden eines Blattlastindikators aus einem Zusammenhang zwischen einer Veränderung des Pitchwinkelindikators und einer Veränderung von Betriebsparametern der Windkraftanlage;
c) Vergleich der Blattlastindikatoren der Rotorblätter, wobei man eine Fehlermeldung ausgibt oder einen Pitchwinkel des Rotorblatts mit dem größten Fehler nachjustiert oder neu einstellt, wenn ein Unterschied zwischen den Blattlastindikatoren der Rotorblätter größer ist als ein vorgebbarer Schwellwert.

Die Sensoranordnung kann beispielsweise mindestens zwei Richtungskomponenten erfassen können, die orthogonal oder unter einem bekannten Winkel zueinander orientiert sind. Wenn sich der Rotor dreht, dann ändert die Sensoranordnung, die an einem Rotorblatt montiert ist, fortwährend ihre Position und auch Ausrichtung im Raum, also ihre Richtung relativ zum Erd-Schwerkraft-Feld. Aus den Ausgangssignalen der Sensoranordnung kann eine Größe ermittelt werden, die den Pitchwinkel wiedergibt oder zumindest eine Relation zum Pitchwinkel hat. Da man nicht den exakten Pitchwinkel benötigt, wird an die Montagegenauigkeit der Sensoranordnung auch nur eine relativ geringe Genauigkeit gestellt. Aus dieser Größe und einem Pitchwinkel-Sollwert, der z.B. aus der Anlagensteuerung entnommen werden kann, lässt sich der Pitchwinkelindikator bilden. Der Pitchwinkelindikator wird für jedes Rotorblatt einzeln gebildet. Im Betrieb einer Windkraftanlage ändern sich in der Regel die äußeren Bedingungen fortlaufend. So ändert sich beispielsweis die Windgeschwindigkeit und Windlast und damit die Drehzahl des Rotors, auch wenn derartige Veränderungen nur gering sind. Mit einer Veränderung der Windlasten ergibt sich auch eine Veränderung der räumlichen Orientierung (was im Pitchwinkel-Indikator erkennbar ist) des jeweiligen Rotorblatts, was auf die Nachgiebigkeit des Rotorblatts zurückzuführen ist. Wenn man die Veränderung des Pitchwinkelindikators und die Veränderung der Betriebsparameter der Windkraftanlage, beispielsweise Windgeschwindigkeit oder Drehzahl, miteinander in Beziehung setzt, kann man einen Zusammenhang bilden und aus den beschriebenen Parametern dieses Zusammenhangs einen Blattlastindikator ableiten. Man kann dann die Blattlastindikatoren der Rotorblätter miteinander vergleichen. Im Idealfall sind die Blattlastindikatoren aller Rotorblätter gleich. In der Realität werden sich gewisse Unterschiede zwischen den Blattlastindikatoren der Rotorblätter ergeben. Bis zu einem gewissen Grad, also einem vorgebbaren Schwellwert, ist ein Unterschied zwischen den Blattlastindikatoren der Rotorblätter akzeptabel. Sollte der Unterschied zu groß werden, kann entweder eine Fehlermeldung ausgegeben werden oder der Pitchwinkel des Rotorblatts mit dem größten Fehler kann nachjustiert oder neu eingestellt werden.

Vorteilhafterweise verwendet man zur Ermittlung des Pitchwinkelindikators spektrale Verfahren zur Verarbeitung der Signale der Sensoranordnung.

Alternativ kann man zur Ermittlung des Pitchwinkelindikators kinematische Verfahren verwenden.

Vorzugsweise verwendet man in jedem Rotorblatt Sensoranordnungen, die an der gleichen radialen Position des Rotorblatts angeordnet sind. Dies erleichtert die Auswertung. Man muss dann bei der Auswertung keine unterschiedlichen radialen Abstände berücksichtigen.

Vorzugsweise verwendet man in jedem Rotorblatt Sensoranordnungen, die in einer radialen Entfernung von der Rotationsachse des Rotors angeordnet sind, die dem 0,25- bis 0,4-fachen der radialen Länge des Rotorblatts entspricht. Je weiter außen die Sensoranordnungen angebracht sind, umso sensitiver ist die Messung. Eine radial äußere Grenze ergibt sich durch den Aufbau des Rotorblatts.

Vorzugsweise verwendet man in jedem Rotorblatt eine Sensoranordnung, deren Achsen in Richtung der größten Steifigkeit und in Richtung der geringsten Steifigkeit des Rotorblatts gerichtet sind. So kann sich beispielsweise eine Achse von der Vorderkante des Rotorblatts zur hinteren Kante erstrecken, während sich die andere Achse senkrecht zu dem dünneren Querschnitt des Rotorblatts erstreckt.

In einer bevorzugten Ausführungsform verwendet man in jedem Rotorblatt eine Sensoranordnung, die einen Beschleunigungssensor, einen Gyroskopen, einen Geschwindigkeitssensor und/oder einen Positionssensor aufweist. Zweckmäßigerweise wird man in jedem Rotorblatt die gleiche Sensoranordnung verwenden. Die aufgezählten Typen von Sensoren, die man in der Sensoranordnung verwenden kann, geben alle ein ausreichendes Signal, um den Pitchwinkelindikator ermitteln zu können.

Vorzugsweise verwendet man als Zusammenhang einen linearen Zusammenhang und der Blattindikator enthält dann eine Steigungsinformation einer Regressions-Geraden. Dies ist eine relativ einfache Möglichkeit, um den Blattlastindikator zu ermitteln.

In einer besonderen Ausführungsform verändert man den Pitchwinkel mindestens eines Rotorblatts, man ermittelt für mindestens zwei Pitchwinkel die Blattlastindikatoren, vergleicht sie miteinander und wählt einen Pitchwinkel aus, bei dem die aerodynamische Last bei gegebener Windgeschwindigkeit am größten ist. Man kann das Verfahren zur Ermittlung der aerodynamischen Unwucht verwenden, um eine zusätzliche Information zu gewinnen, die man zur Einstellung eines optimalen Betriebs der Windkraftanlage verwenden kann. Über gezielte Variationen des Pitchwinkels einer oder mehrerer Blätter über die Steuerung der Windkraftanlage können die Blattlastindikatoren in verschiedenen Pitchwinkelzuständen ermittelt werden und untereinander verglichen werden. Somit kann man optimale aerodynamische Betriebspunkte finden. Dies kann auf manueller Basis oder in vollautomatisierter Weise geschehen. Durch diese Vorgehensweise können nicht nur relative Unterschiede zwischen den Rotorblättern erkannt werden, die zu der aerodynamischen Unwucht führen und die man ggfs. beseitigen kann, sondern man kann auch eine unter Ertragsgesichtspunkten optimale absolute Einstellung der Pitchwinkel aller Blätter erzielen.

In einer bevorzugten Ausgestaltung ist vorgesehen, dass man eine Fehlerwarnung erzeugt, wenn der Pitchwinkelindikator um mehr als einen vorbestimmten Schwellwert von einem durch die Anlagensteuerung vorgegebenen Pitchwinkel-Sollwert abweicht. Man kann dann eine Fehlfunktion, beispielsweise einen Defekt des Pitchantriebs des betreffenden Rotorblatts erkennen und Maßnahmen zur Beseitigung des Fehlers ergreifen, falls erforderlich.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Windkraftanlage,
- Fig. 2: einen Querschnitt durch ein Rotorblatt,
- Fig. 3: eine schematische Darstellung zur Erläuterung einer Verformung des Rotorblatts,
- Fig. 4: eine schematische Darstellung zur Erläuterung der Ermittlung eines Blattlastindikators, und
- Fig. 5: eine Gegenüberstellung von Blattlastindikatoren verschiedener Rotorblätter.

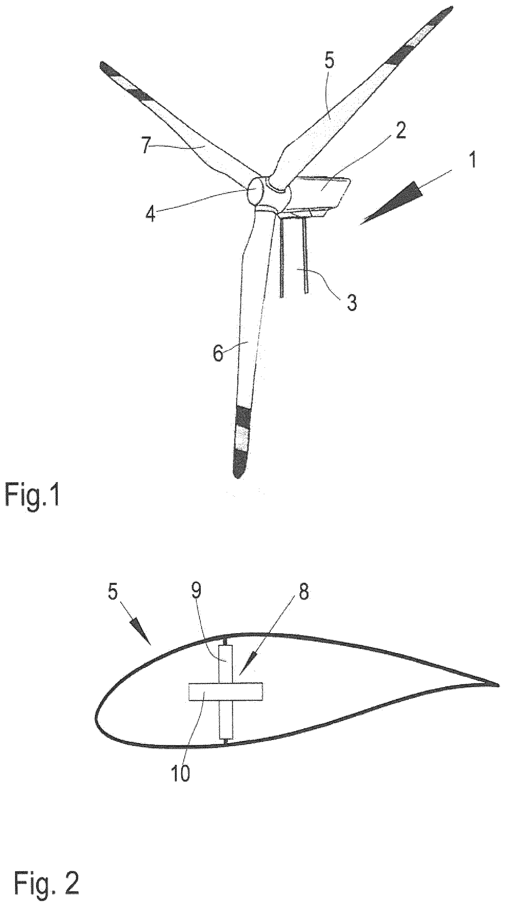

Fig. 1 zeigt schematisch eine Windkraftanlage 1 mit einer Gondel 2, die auf einem Mast 3 angeordnet ist. An der Gondel 2 ist ein Rotor 4 drehbar gelagert, der einen in der Gondel 2 angeordneten und nicht näher dargestellten Generator antreibt, wenn er sich dreht. Am Rotor 4 sind drei Rotorblätter 5, 6, 7 punktsymmetrisch um die Achse des Rotors 4 angeordnet. Die Rotorblätter 5, 6, 7 können um eine Achse, die parallel zu ihrer Längserstreckung verläuft, verdreht werden. Damit lässt sich der so genannte "Pitchwinkel" einstellen. Die Achse verläuft bei der Darstellung der Fig. 2 senkrecht zur Zeichenebene.

Fig. 2 zeigt schematisch das Rotorblatt 5. Die anderen Rotorblätter 6, 7 sind genauso aufgebaut. Im Idealfall sind alle Rotorblätter 5, 6, 7 identisch. In der Realität werden sich kleinere Abweichungen ergeben.

Das Rotorblatt 5 weist eine Sensoranordnung 8 auf, die im oder am Rotorblatt 5 montiert ist. Die Sensoranordnung weist zwei Sensoren 9, 10 auf, deren Messachsen in einem bekannten Winkel, beispielsweise orthogonal zueinander angeordnet sind. Die Sensoren können als Beschleunigungssensor, Gyroskop, Geschwindigkeitssensor oder Positionssensor ausgebildet sein. Kombinationen dieser Sensortypen sind möglich. Die Sensoranordnung ist in der Lage, eine Lageveränderung ihrer Position in Bezug auf die Erd-Schwerkraft zu erfassen.

Vorzugsweise erfasst der Sensor 9 die Beschleunigung, Geschwindigkeit oder Lage im Bereich der geringsten Steifigkeit des Rotorblatts 5. Dies ist in der Fig. 2 die Richtung, in der das Rotorblatt 5 seine geringste Dicke aufweist. Die Sensoranordnung 10 weist hingegen eine Messachse auf, in der das Rotorblatt 5 seine größte Steifigkeit aufweist. Dies ist die Richtung, in der das Rotorblatt 5 seine größte Erstreckung aufweist. Man bezeichnet die beiden Richtungen auch als "Flap" und "Edge".

Wenn sich das Rotorblatt 5 dreht, dann gibt jeder Sensor 9, 10 der Sensoranordnung 8 fortlaufend ein Signal aus, das sich in Abhängigkeit von der Anlagenkinematik und der windlastbedingten Rotorblattdurchbiegung fortlaufend ändert und das man beispielsweise nach spektralen oder kinematischen Verfahren auswertet und daraus einen Pitchwinkel-Indikator bildet.

Damit der Rotor 4 sich drehen kann, ist Wind erforderlich. Der Wind führt zu einer aerodynamischen Last auf jedes Rotorblatt 5-7. Diese aerodynamische Last führt in Folge der Nachgiebigkeit des Rotorblatts 5-7 zu relativ kleinen Winkeländerungen der Sensoranordnung 8. Diese Winkeländerung äußert sich als Abweichung, die auch als "Fehler" bezeichnet werden kann, in dem Pitchwinkelindikator. Je größer die aerodynamische Last auf das Rotorblatt 5-7 und damit die Durchbiegung des jeweiligen Rotorblatts 5-7 ist, desto größer ist der Fehler des Pitchwinkelindikators Ind_{1-BI}.

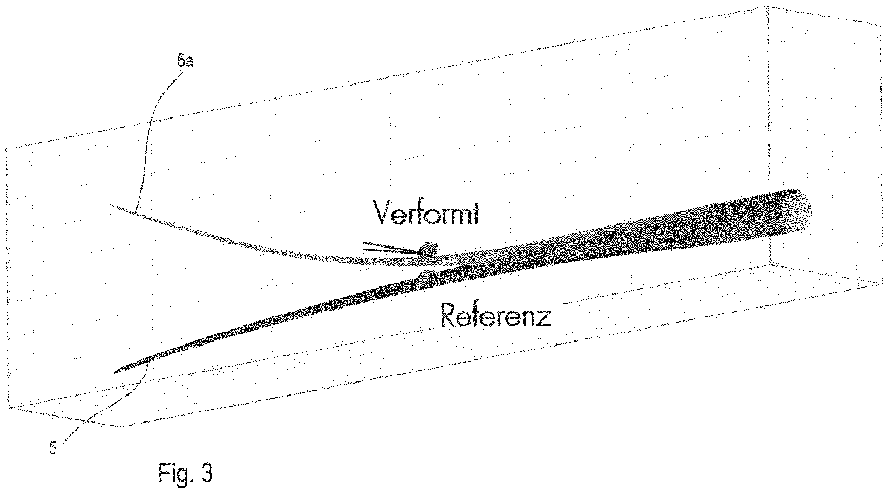

Dies ist schematisch in Fig. 3 dargestellt. Hier ist das Rotorblatt 5 als "Referenz" im unverformten Zustand dargestellt. Bei Auftreten einer Windlast (bei der Darstellung der Fig. 3 wird angenommen, dass der Wind von unten kommt) ergibt sich eine Form 5a des Rotorblatts.

Aus der Anlagensteuerung, die üblicherweise in der Gondel 2 der Windkraftanlage 1 untergebracht ist, aber auch an anderer Stelle untergebracht werden kann, kann man lastabhängige Betriebsparameter gewinnen, beispielsweise die Windgeschwindigkeit oder die Drehzahl des Rotors 4.

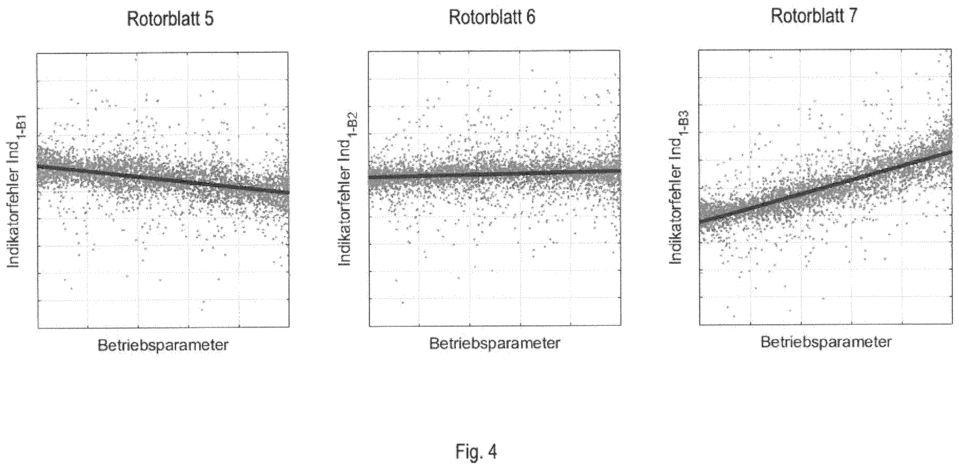

In Fig. 4 ist lediglich qualitativ von links nach rechts ein Betriebsparameter, beispielsweise die Windgeschwindigkeit oder die Rotordrehzahl, aufgetragen, während von unten nach oben der Pitchwinkelindikator Ind_{1-Bi} aufgetragen ist. Da sich die äußeren Bedingungen, beispielsweise die Windgeschwindigkeit, fortlaufend ändern, ergibt sich eine Vielzahl von Punkten, wobei jeder Punkt für einen bestimmten Zeitpunkt den Zusammenhang zwischen dem Betriebsparameter und dem Pitchwinkelindikator Ind_{1-Bi} darstellt.

Man kann nun eine Regressionskurve, im vorliegenden Fall eine Gerade, zwischen dem lastabhängigen Fehler im Pitchwinkelindikator Ind _{1-Bi} und dem lastabhängigem Betriebsparameter bilden, aus dem sich dann der Blattlastindikator Ind_{2-Bi} ergibt, der den Belastungszustand des einzelnen Rotorblatts 5-7 abbildet, beispielweise den Zusammenhang zwischen der aerodynamischen Last und der Windgeschwindigkeit.

Bei Verwendung der oben erwähnten Geraden lässt sich beispielsweise die Steigung der Geraden unmittelbar als Blattlastindikator verwenden. Hierbei ist zu bemerken, dass der Blattlastindikator nicht unbedingt eine absolute Größe der Blattlast angeben muss, sondern nur dazu dienen soll, ein Verhältnis der Blattlasten der unterschiedlichen Rotorblätter 5-7 wiederzugeben.

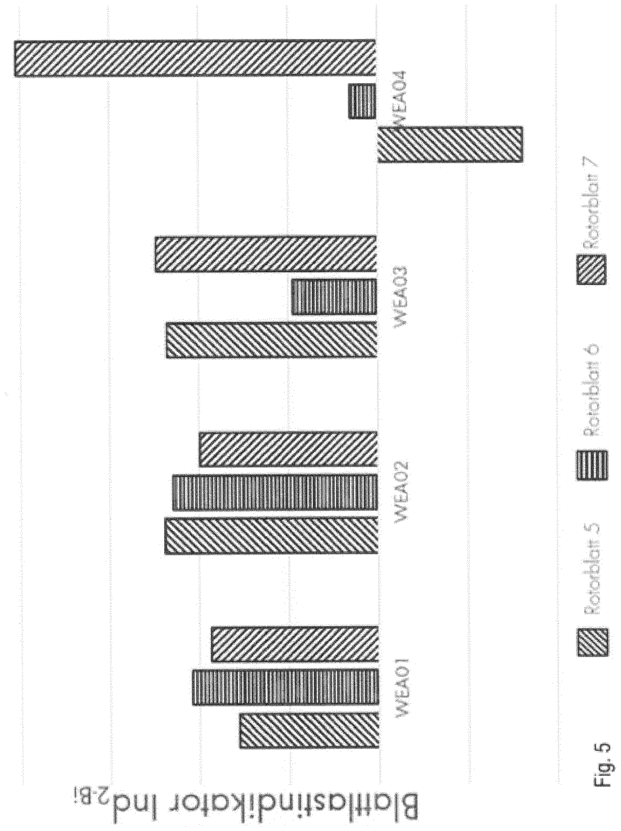

Fig. 5 zeigt nun verschiedene Möglichkeiten, wie sich die Blattlastindikatoren bei verschiedenen Windkraftanlagen WEA01, WEA02, WEA03 und WEA04 verhalten können.

Bei den Windkraftanlagen WEA01, WEA02 ergeben sich etwa gleiche Blattlastindikatoren zwischen den drei Rotorblättern 5-7. Eine exakte Gleichheit der Blattlastindikatoren wird nicht gefordert und kann in der Regel auch nicht erreicht werden.

In der Windkraftanlage WEA03 ist das mittlere Blatt auffällig, was auf eine aerodynamische Unwucht schließen lässt.

Bei der Windkraftanlage WEA04 ist der Unterschied zwischen den Blattlastindikatoren so groß, dass nicht nur auf eine aerodynamische Unwucht geschlossen werden kann, sondern auch untersucht werden müsste, ob ein anderer Fehler vorliegt.

Sollte man einen Unterschied in den Blattlastindikatoren feststellen, wie er beispielsweise bei der Windkraftanlage WEA03 vorhanden ist, dann kann man versuchen, durch eine Änderung des Pitchwinkels für das mittlere Rotorblatt eine Annäherung der Blattlastindikatoren zu erreichen. Dieses Verstellen kann manuell oder auch automatisch erfolgen.

Auch dann, wenn, wie bei den Windkraftanlagen WEA01, WEA02, die Blattlastindikatoren im Wesentlichen gleich sind, kann man durch eine Verstellung der Pitchwinkel versuchen, einen optimalen Betriebspunkt im Hinblick auf den Ertrag der jeweiligen Windkraftanlage zu ermitteln.

Über gezielte Variationen des Pitchwinkels eines oder mehrerer Rotorblätter 5-7 über die Anlagensteuerung können Blattlastindikatoren Ind_{2-Bi} in verschiedenen Pitchwinkelzuständen ermittelt werden und untereinander verglichen werden. Somit können optimale aerodynamische Betriebspunkte gefunden werden. Auch dies kann auf manueller Basis oder in vollautomatisierter Weise geschehen. Durch dieses Vorgehen können nicht nur relative Unterschiede zwischen den Rotorblättern 5-7 erkannt werden, sondern auch eine unter Ertragsgesichtspunkten optimale absolute Einstellung der Pitchwinkel aller Rotorblätter 5-7 erzielt werden.

Weicht der Pitchwinkelindikator Ind_{1-Bi} plötzlich massiv von der Anlagenvorgabe, also dem Pitchwinkel-Sollwert ab, so kann man daran eine Fehlfunktion oder einen Defekt des Pitchantriebs des betreffenden Rotorblatts 5-7 erkennen und ggfs. beheben.

## Patentansprüche

1. Verfahren zum Ermitteln einer aerodynamischen Unwucht an einem Rotor einer Windkraftanlage (1), der mehrere Rotorblätter (5-7) aufweist, mit folgenden Schritten:
a) für jedes Rotorblatt (5-7) ermitteln eines Pitchwinkelindikators (Ind_{1-Bi}) mit Hilfe einer an dem Rotorblatt (5-7) montierten Sensoranordnung (8), die jeweils eine Lageveränderung ihrer Position in Bezug auf die Erd-Schwerkraft erfasst, und einem Pitchwinkel-Sollwert
b) für jedes Rotorblatt (5-7) bilden eines Blattlastindikators (Ind_{2-Bi})
c) Vergleich der Blattlastindikatoren (Ind_{2-Bi}) der Rotorblätter (5-7),
wobei der Blattlastindikator aus einem Zusammenhang zwischen einer Veränderung des Pitchwinkelindikators (Ind_{1-Bi}) und einer Veränderung von Betriebsparametern der Windkraftanlage (1) gebildet wird, wobei man eine Fehlermeldung ausgibt oder einen Pitchwinkel des Rotorblatts mit dem größten Fehler nachjustiert oder neu einstellt, wenn ein Unterschied zwischen den Blattlastindikatoren der Rotorblätter (5-7) größer ist als ein vorgebbarer Schwellwert.

2. Verfahren nach Anspruch 1, **dadurch gekennzeichnet, dass** man zur Ermittlung des Pitchwinkelindikators (Ind_{1-Bi}) spektrale oder kinematische Verfahren zur Verarbeitung der Signale der Sensoranordnung (8) verwendet.

3. Verfahren nach Anspruch 1 oder 2, **dadurch gekennzeichnet, dass** man in jedem Rotorblatt (5-7) Sensoranordnungen (8) verwendet, die an der gleichen radialen Position des Rotorblatts (5-7) angeordnet sind.

4. Verfahren nach Anspruch 3, **dadurch gekennzeichnet, dass** man in jedem Rotorblatt (5-7) Sensoranordnungen (8) verwendet, die in einer Entfernung von der Rotationsachse des Rotors angeordnet sind, die dem 0,25- bis 0,4-fachen der radialen Länge des Rotorblatts entspricht.

5. Verfahren nach einem der Ansprüche 1 bis 4, **dadurch gekennzeichnet, dass** man in jedem Rotorblatt (5-7) eine Sensoranordnung (10) verwendet, deren Achsen in Richtung der größten Steifigkeit und in Richtung der geringsten Steifigkeit des Rotorblatts (5-7) gerichtet sind.

6. Verfahren nach einem der Ansprüche 1 bis 5, **dadurch gekennzeichnet, dass** man in jedem Rotorblatt (5-7) eine Sensoranordnung (8) verwendet, die einen Beschleunigungssensor, einen Gyroskopen, einen Geschwindigkeitssensor und/oder einen Positionssensor aufweist.

7. Verfahren nach einem der Ansprüche 1 bis 6, **dadurch gekennzeichnet, dass** man als Zusammenhang einen linearen Zusammenhang verwendet und der Blattlastindikator (Ind_{2-Bi}) eine Steigungsinformation einer Regressions-Geraden dieses Zusammenhangs enthält.

8. Verfahren nach einem der Ansprüche 1 bis 7, **dadurch gekennzeichnet, dass** man den Pitchwinkel mindestens eines Rotorblatts (5-7) verändert, für mindestens zwei Pitchwinkel die Blattlastindikatoren (Ind_{2-Bi}) ermittelt, miteinander vergleicht und einen Pitchwinkel auswählt, bei dem die aerodynamische Last bei gegebener Windgeschwindigkeit am größten ist.

9. Verfahren nach einem der Ansprüche 1 bis 8, **dadurch gekennzeichnet, dass** man eine Fehlerwarnung erzeugt, wenn der Pitchwinkelindikator (Ind_{1-Bi}) um mehr als einen vorbestimmten Schwellwert vom Pitchwinkel-Sollwert abweicht.

## Claims

1. A method for determining an aerodynamic imbalance of a rotor of a wind turbine (1) that has a plurality of rotor blades (5-7), comprising the following steps:
a) determining a pitch angle indicator (Ind_{1-Bi})for each rotor blade (5-7) with the aid of a sensor arrangement (8) which detects in each case a change in position in relation to the Earth's gravity, and of a pitch angle setpoint value,
b) forming a blade load indicator (Ind_{2-Bi})for each rotor blade (5-7)
(c) comparing the blade load indicators (Ind_{2-Bi}) of the rotor blades (5-7), wherein the blade load indicator is formed based on a relationship between a change in the pitch angle indicator (Ind_{1-Bi}) and a change of operating parameters of the wind turbine (1), wherein an error message is displayed or a pitch angle of the rotor blade with the greatest error is readjusted or reset if a difference between the blade load indicators of the rotor blades (5-7) is greater than a predeterminable threshold value.

2. The method according to claim 1, **characterized in that** spectral or kinematic methods for processing the signals of the sensor arrangement (8) are used to determine the pitch angle indicator (Ind_{1-Bi}).

3. The method according to claim 1 or 2, **characterized in that** sensor arrangements (8) are used in each rotor blade (5-7), which sensor arrangements are arranged at the same radial position of the rotor blade (5-7).

4. The method according to claim 3, **characterized in that** sensor arrangements (8) are used in each rotor blade (5-7), which sensor arrangements are arranged at a distance from the axis of rotation of the rotor corresponding to 0.25 to 0.4 times the radial length of the rotor blade.

5. The method according to any one of claims 1 to 4, **characterized in that** a sensor arrangement (10) is used in each rotor blade (5-7), the axes of which sensor arrangement are directed in the direction of the greatest stiffness and in the direction of the least stiffness of the rotor blade (5-7).

6. The method according to any one of claims 1 to 5, **characterized in that** a sensor arrangement (8) is used in each rotor blade (5-7), which sensor arrangement includes an acceleration sensor, a gyroscope, a speed sensor and/or a position sensor.

7. The method according to any one of claims 1 to 6, **characterized in that** a linear relationship is used as the relationship and the blade load indicator (Ind_{2-Bi}) contains gradient information of a regression line of this relationship.

8. The method according to any one of claims 1 to 7, **characterized in that** the pitch angle of at least one rotor blade (5-7) is changed, the blade load indicators (Ind_{2-Bi}) are determined for at least two pitch angles, are compared with one another and a pitch angle is selected at which the aerodynamic load is greatest at a given wind speed.

9. The method according to any one of claims 1 to 8, **characterized in that** an error warning is generated if the pitch angle indicator (Ind_{1-Bi}) deviates from the pitch angle setpoint value by more than a predetermined threshold value.

## Revendications

1. Procédé de détermination d'un balourd aérodynamique d'un rotor d'une éolienne (1), qui comporte plusieurs pales de rotor (5-7), avec les étapes suivantes :
a) pour chaque pale de rotor (5-7) détermination d'un indicateur d'angle d'incidence (Ind_{1-Bi}) à l'aide d'un système de détection (8) monté sur la pale de rotor (5-7), qui saisit respectivement une modification de position de sa position par rapport à la force de pesanteur terrestre et une valeur théorique d'angle d'incidence,
b) pour chaque pale de rotor (5-7) formation d'un indicateur de charge de pale (Ind_{2-Bi}),
c) comparaison des indicateurs de charge de pale (Ind_{2-Bi}) des pales de rotor (5-7), sachant que l'indicateur de charge de pale est formé à partir d'un rapport entre une modification de l'indicateur d'angle d'incidence (Ind_{1-Bi}) et une modification des paramètres de fonctionnement de l'éolienne (1), sachant qu'on émet un message d'erreur ou réajuste ou règle à nouveau un angle d'incidence de la pale de rotor avec l'erreur maximale, si une différence entre les indicateurs de charge de pale des pales de rotor (5-7) est plus grande qu'une valeur de seuil prédéfinissable.

2. Procédé selon la revendication 1, **caractérisé en ce que** pour la détermination de l'indicateur d'angle d'incidence (Ind_{1-Bi}), on utilise un procédé spectral ou cinématique pour le traitement de signaux du système de détection (8).

3. Procédé selon la revendication 1 ou 2, **caractérisé en ce que** l'on utilise dans chaque pale de rotor (5-7) des systèmes de détection (8) qui sont disposés à la même position radiale de la pale de rotor (5-7).

4. Procédé selon la revendication 3, **caractérisé en ce que** l'on utilise dans chaque pale de rotor (5-7) des systèmes de détection (8) qui sont disposés à une distance de l'axe de rotation du rotor qui correspond de 0,25 à 0,4 fois la longueur radiale de la pale de rotor.

5. Procédé selon l'une quelconque des revendications 1 à 4, **caractérisé en ce que** l'on utilise dans chaque pale de rotor (5-7) un système de détection (10) dont les axes sont dirigés en direction de la rigidité maximale et en direction de la rigidité minimale de la pale de rotor (5-7).

6. Procédé selon l'une quelconque des revendications 1 à 5, **caractérisé en ce que** l'on utilise dans chaque pale de rotor (5-7) un système de détection (8) qui comporte un capteur d'accélération, un gyroscope, un capteur de vitesse et/ou un capteur de position.

7. Procédé selon l'une quelconque des revendications 1 à 6, **caractérisé en ce que** l'on utilise en tant que corrélation un rapport linéaire et l'indicateur de charge de pale (Ind_{2-Bi}) contient une information de pas d'une droite de régression de ce rapport.

8. Procédé selon l'une quelconque des revendications 1 à 7, **caractérisé en ce que** l'on modifie l'angle d'incidence d'au moins une pale de rotor (5-7), détermine pour au moins deux angles d'incidence les indicateurs de charge de pale (Ind_{2-Bi}), les compare l'un à l'autre et sélectionne un angle d'incidence pour lequel la charge aérodynamique est au maximum à une vitesse de vent donnée.

9. Procédé selon l'une quelconque des revendications 1 à 8, **caractérisé en ce que** l'on produit un avertissement de défaut, lorsque l'indicateur d'angle d'incidence (Ind_{1-Bi}) s'écarte de plus d'une valeur de seuil préalablement définie de la valeur théorique d'angle d'incidence.
